# EUROPÄISCHE PATENTSCHRIFT

(11) **EP 1 098 704 B1**
(45) Veröffentlichungstag und Bekanntmachung des Hinweises auf die Patenterteilung: **23.04.2003**
(21) Anmeldenummer: 99945907.6
(22) Anmeldetag: 05.07.1999
(51) Int. Cl.: B01J 38/04, B01J 38/62, B01J 38/64, B01J 38/00, B01J 35/04

(54) **VERFAHREN ZUR REGENERIERUNG EINES DESAKTIVIERTEN KATALYSATORS**
METHOD FOR REGENERATING A DEACTIVATED CATALYST
PROCEDE DE REGENERATION D'UN CATALYSEUR DESACTIVE

(30) Priorität: 16.07.1998 DE 19832057
(43) Veröffentlichungstag der Anmeldung: 16.05.2001
(73) Patentinhaber: SIEMENS AKTIENGESELLSCHAFT, 80333 München (DE)
(72) Erfinder: NEUFERT, Ronald, D-96247 Michelau (DE)
(74) Vertreter: Freier, Rüdiger (DE)
(86) Internationale Anmeldenummer: DE9902067
(87) Internationale Veröffentlichungsnummer: WO00003804

(56) Entgegenhaltungen:
- EP-A- 0 268 201
- EP-A- 0 499 351
- DE-A- 4 033 797
- DE-A- 19 723 796
- GB-A- 2 226 046

## Beschreibung

Die Erfindung betrifft ein Verfahren zur Regenerierung eines Katalysators, insbesondere Platten- oder Wabenkatalysators, der durch Katalysatorgifte zumindest teilweise desaktiviert ist, wobei der Katalysator mit einem gasförmigen Reduktionsmittel behandelt wird, um die Katalysatorgifte zu entfernen.

Vor allem für das Reinigen von Abgasen werden Katalysatoren, wie z. B. Platten- und Wabenkatalysatoren verwendet, die vorzugsweise als Oxidations- oder Reduktionskatalysatoren ausgeführt sind. Diese Abgasreinigungskatalysatoren werden während ihres Einsatzes durch im Abgas enthaltene Katalysatorgifte in Form von z. B. Schwermetallen, wie Quecksilber, Arsen, Thalium etc., vergiftet und desaktiviert. Diese "Vergiftung" der Katalysatoren erfolgt durch Ablagerung von Schwermetallverbindungen (Oxide, Sulfate) und Arsenoxiden sowie durch in Folge einer Abreaktion mit Katalysator-Aktivkomponenten, wie z. B. W, V, Mo, Fe, Cu, Co, Ni, Cr entstehende Arsenverbindungen bzw. Phosphate dieser Aktivkomponenten.

Aufgrund der hohen Kosten, einen desaktivierten Katalysator durch einen neuen auszutauschen, wurden Regenerierungsverfahren durch Waschen der Katalysatoren entwickelt. Aus der JP-C-07222924 von MITSUBISHI ist ein solches Regenerierungsverfahren für einen Denox-Katalysator bekannt, bei dem dieser durch Waschen mit Wasser oder verdünnter anorganischer Säure mit anschließenden Waschen mit Oxalsäure und abschließenden Waschen mit Wasser wieder aktiviert werden kann.

Aus der JP-C-52063891 ist ein Regenerierungsverfahren für einen desaktivierten TiO₂/V₂O₅-Katalysator bekannt, bei dem das Waschen mit einer 5 %-igen NH₃-Lösung durchgeführt wird. Ein Verfahren, bei dem der Katalysator mit einer Oxalsäure gewaschen und anschließend mit einer Vanadium-Verbindung getränkt wird, ist aus der JP-C-54010294 bekannt.

Aus der EP 0 824 039 A1, der DE 34 30 887 A1, der DE-AS 1 171 206 und aus Chem. Abstr. Nr. 91:26538 zu JP 7902986 A sind Verfahren zur Regenerierung eines Katalysators bekannt, bei denen der Katalysator mit einem gasförmigen Reduktionsmittel behandelt wird.

Bei dem aus der EP 0 824 039 A1 bekannten Verfahren wird ein durch Arsen vergifteter Katalysator während einer thermischen Behandlung mit einem gasförmigen Reduktionsmittel wie H₂, CO und CH₄ behandelt.

In der DE 34 30 887 A1 wird bei einem Verfahren zum Reaktivieren eines Katalysators, der zur NOx-Entfernung aus Rauchgasen eingesetzt ist, in reduzierender Atmosphäre mit einem erhitzten Kohlenmonoxidstrom beaufschlagt.

Das Verfahren gemäß der DE-AS 1 171 206 betrifft die Regenerierung von mit Blei verunreinigten Katalysatoren für die Reinigung von Abgasen aus Brennkraftmaschinen. Dabei wird der verunreinigte Katalysator mit einem reduzierenden Gas, wie Wasserstoff, Kohlenmonoxid und Kohlenwasserstoffen bei erhöhten Temperaturen regeneriert.

Die Veröffentlichung Chem. Abstr. Nr. 91:26538 zu JP 7902986 A betrifft die Regenerierung von Entschwefelungs- und Denitrierkatalysatoren. Dabei wird der Katalysator zwischen 700 und 1000 °C in einem reduzierenden Gas regeneriert.

Bei den bekannten Regenerierungsverfahren der Katalysatoren durch Waschen mit Wasser oder Säuren und/oder dem anschließenden Aufbringen von Aktivkomponenten ist es von Nachteil, daß lösliche bzw. teilweise lösliche Katalysator-Aktivkomponenten herausgewaschen werden, wodurch die Wirkungsweise eines Abgaskatalysators herabgesetzt wird. Dieses Problem besteht bei den Verfahren, bei welchem ein gasförmiges Reduktionsmittel eingesetzt wird, nicht.

Ausgehend vom geschilderten Stand der Technik liegt der Erfindung die Aufgabe zugrunde, ein Regenerierungsverfahren für Katalysatoren zu schaffen, bei dem die Regenerationswirkung verbessert wird.

Diese Aufgabe wird gemäß einer ersten Alternative erfindungsgemäß dadurch gelöst, daß der Katalysator nach der Behandlung mit dem gasförmigen Reduktionsmittel mit einem polyfunktionellen Komplexbildner gewaschen wird, wobei als polyfunktioneller Komplexbildner eine Hydroxy-Carbonsäure- oder Hydroxy-Dicarbonsäure-Lösung oder eine Lösung organischer Amine verwendet wird.

Die Aufgabe wird gemäß einer zweiten Alternative erfindungsgemäß dadurch gelöst, daß der Katalysator nach der Behandlung mit dem gasförmigen Reduktionsmittel einem Tränkprozeß mit mindestens einer Katalysator-Aktivkomponente unterzogen wird, die in einem polyfunktionellen Komplexbildner aufgeschlämmt oder gelöst wird, wobei als polyfunktioneller Komplexbildner eine Hydroxy-Carbonsäure- oder Hydroxy-Dicarbonsäure-Lösung oder eine Lösung organischer Amine verwendet wird.

Teilweise entstehen durch Reaktion zwischen dem Katalysatorgift und den Aktivkomponenten chemisch stabile Verbindungen, insbesondere Schwermetallverbindungen (Oxide/Sulfate), Arsenoxide bzw. durch Abreaktion mit Aktivkomponenten (W, Mo, V) erzeugte Arsenverbindungen, Phosphate der Aktivkomponenten etc., wodurch letztere als Katalysatorzentrum nicht mehr zur Verfügung stehen. Durch das Regenerierungsverfahren wird die chemische Bindung der immobilisierten Katalysatorgifte mit den Katalystor-Aktivkomponenten durch die Behandlung mit dem gasförmigen Reduktionsmittel unter reduzierenden Bedingungen in eine Oxidationsstufe überführt, bei der die betreffende Verbindung mit der Aktivkomponente chemisch instabil und damit desorbierbar wird bei gleichzeitiger Immobilität der Aktivkomponente. Durch den Gasstrom werden schließlich die flüchtigen Schwermetallverbindungen (z.B. As₂O₃, AsCl₃, Carbonyle, Hydride etc.) aus dem Katalysatormaterial entfernt, ohne die Aktivkomponenten mitzunehmen. Die Desaktivierung wird damit rückgängig gemacht. Für die gasförmigen Reduktionsmittel können beispielsweise SO₂, CO, H₂, CH₄, NH₃ etc. oder Kombinationen hieraus oder mit HCl verwendet werden.

Ein besonders hoher Regenerierungseffekt durch den gasförmigen Reduktionsmittelstrom wird erzeugt, wenn während der gasförmigen Reduktionsmittelbehandlung eine thermische Behandlung des Katalysators bei einer Temperatur von 100 bis 500° C durchgeführt wird. Dies ist von Vorteil, da je nach Reaktivität des gasförmigen Reduktionsmittels unterschiedliche Temperaturen für ein Optimum der Reaktionsgeschwindigkeit vorliegen können. Teilweise können durch die Reaktion zwischen Katalysatorgift und Katalysatoraktivkomponente derart chemisch stabile Verbindungen auftreten, die nur in gewissen Temperaturbereichen instabil werden und somit ihre Immobilität verlieren.

Manche Reduktionsmittel erlauben es nicht, thermisch erhitzt zu werden. Bei diesen Reduktionsmitteln wird die thermische Behandlung nach dem Beaufschlagen des Katalysators mit dem gasförmigen Reduktionsmittel vorgenommen. Auf diese Weise wird der selbe Regenerierungseffekt erzeugt, wie wenn die thermische Behandlung während der Reduktionsmittelbehandlung durchgeführt worden wäre.

Um den Regenerierungseffekt weiter zu verbessern, werden die Katalysatoren nach der gasförmigen Reduktionsmittelbehandlung mit einem polyfunktionellen Komplexbildner gewaschen, um die wieder freigesetzten Aktivkomponenten des Katalysators anzulösen und für eine homogene Verteilung zu sorgen. Dabei werden für den polyfunktionellen Komplexbildner Hydroxy-Carbonsäure- oder Hydroxy-Dicarbonsäure-Lösungen herangezogen. Optional können anstatt der Hydroxy-Carbon- bzw. -Dicarbonsäure-Lösung auch Lösungen organischer Amine verwendet werden. Die organischen Amine sind speziell für Vanadium besonders wirksam.

Für eine besonders homogene Verteilung der Aktivkomponenten in dem Katalysator nach dem Regenerierungsvorgang mit Gas wird der Katalysator nach dem Waschen mit einem polyfunktionellen Komplexbildner, wie Hydroxy-Carbonsäure-, Hydroxy-Dicarbonsäure-Lösungen oder Lösungen organischer Amine, einem Tränkprozeß mit Aktivkomponenten unterzogen. Letztere sind in dem polyfunktionellen Komplexbildner aufgelöst oder aufgeschlämmt. Die Behandlung mit Hydroxy-Carbonsäure- oder Hydroxy-Dicarbonsäure-Lösungen verbessert die Aktivkomponentenverteilung im regenerierten Katalysator.

Alternativ wird der Verfahrensschritt des Waschens des Katalysators mit dem polyfunktionellen Komplexbildner durch den obenbeschriebenen Tränkprozeß ersetzt.

Eine Erhöhung des Regenerierungsgrades kann auch bewirkt werden, wenn unmittelbar nach der Behandlung des Katalysators mit einem gasförmigen Reduktionsmittel und/oder nach dem Waschen des Katalysators mit polyfunktionellen Komplexbildnern und/oder nach dem Tränkprozeß mit einem Katalysator-Aktivkomponenten aufweisenden polyfunktionellen Komplexbildner und/oder nach dem Trocknen des Katalysators der Katalysator mindestens einer thermischen Handlung unterzogen wird.

Obwohl das Verfahren zur Regenerierung eines desaktivierten Katalysators für alle Katalysatorformen gleichermaßen geeignet ist, soll hier vorzugsweise der SCR-Denox-Katalysator auf der Basis von TiO₂ mit Dotierungen von WO₃/MoO₃ und V₂O₅ optional verdünnt mit inaktiven Material und/oder Füllstoffen genannt werden.

Nach dem Regenerieren der Katalysatoren können die gasförmigen Reinigungsmittel durch Reinigungseinrichtungen (Entschwefelung bzw. Entstickung) mittels NH₃ beseitigt werden. Als besonders geeignete bzw. oft verwendete Reinigungsmittel werden SO₂ und NH₃ verwendet, da sie eine gute Handtierbarkeit aufweisen und ohnehin im Abgas vorhanden sind. Auch CH₄ und Erdgas, die im Falle einer Großfeuerungsanlage für "Stütz-feuer" ebenfalls vorhanden sind, weisen günstige Reinigungsmittel Eigenschaften auf.

Weitere Vorteile, Merkmale und Einzelheiten der Erfindung werden durch ein bevorzugtes Ausführungsbeispiel für ein erfindungsgemäßes Regenerierungsverfahren nachfolgend erläutert.

Ausgegangen wir von einem SCR-Katalysator, der durch Arsen desaktiviert ist. Dieser Katalysator wird folgender Behandlung unterzogen:
1. Der desaktivierte SCR-Katalysator wird für 24 Stunden von einem Abgas, das 1000 vppm SO₂ als gasförmiges Reduktionsmittel enthält, bei einer Temperatur von 400° C durchströmt.
2. Anschließend wird der Katalysator auf Umgebungstemperatur abgekühlt.
3. Dann wird in den Katalysator ein Gemisch mit einem Mischungsverhältnis von 20 Gew.-% Monoethanolamin zu Wasser bis zur Flüssigkeitsaufnahme-Sättigung des Katalysators eingedüst. Je nach Zustand des zu aktivierenden SCR-Katalysators werden bis zu 20 Gew.-% Ammoniummetavanadat dem Gemisch aus Monoethanolamin und Wasser zugesetzt.
4. Anschließend wird der Katalysator unter Durchleiten von Luft bei einer Temperatur von weniger als 60° C getrocknet.
5. Chemisch stabil wird das Ammoniummetavanadat durch eine anschließende Thermolyse in einem Temperaturbereich von 200 bis 250° C, die im Rahmen des Wiederanfahrens einer den Katalysator umfassenden Anlage durchgeführt werden kann.

Ein Vergleich des Katalysators nach und vor dem Regenerieren desselben läßt Rückschlüsse auf eine Erhöhung der NOₓ-Aktivität von bis zu 50 % zu.

## Patentansprüche

1. Verfahren zur Regenerierung eines Katalysators, insbesondere Platten- oder Wabenkatalysators, der durch Katalysatorgifte zumindest teilweise desaktiviert ist, wobei der Katalysator zur Entfernung der Katalysatorgifte mit einem gasförmigen Reduktionsmittel behandelt wird,
**dadurch gekennzeichnet, daß** der Katalysator nach der Behandlung mit dem gasförmigen Reduktionsmittel mit einem polyfunktionellen Komplexbildner gewaschen wird, wobei als polyfunktioneller Komplexbildner eine Hydroxy-Carbonsäure- oder Hydroxy-Dicarbonsäure-Lösung oder eine Lösung organischer Amine verwendet wird.

2. Verfahren nach Anspruch 1,
**dadurch gekennzeichnet, daß** nach dem Waschen der Katalysator einem Tränkprozeß mit mindestens einer Katalysator-Aktivkomponente unterzogen wird, die in einem polyfunktionellen Komplexbildner aufgeschlämmt oder gelöst wird.

3. Verfahren nach Anspruch 2,
**dadurch gekennzeichnet, daß** die Katalysator-Aktivkomponente W, V, Mo, Fe, Cu, Fe, Co, Ni, Cr oder eine Kombination aus diesen umfaßt.

4. Verfahren zur Regenerierung eines Katalysators, insbesondere Platten- oder Wabenkatalysators, der durch Katalysatorgifte zumindest teilweise desaktiviert ist, wobei der Katalysator zur Entfernung der Katalysatorgifte mit einem gasförmigen Reduktionsmittel behandelt wird
**dadurch gekennzeichnet, daß** der Katalysator nach der Behandlung mit dem gasförmigen Reduktionsmittel einem Tränkprozeß mit mindestens einer Katalysator-Aktivkomponente unterzogen wird, die in einem polyfunktionellen Komplexbildner aufgeschlämmt oder gelöst wird, wobei als polyfunktioneller Komplexbildner eine Hydroxy-Carbonsäure- oder Hydroxy-Dicarbonsäure-Lösung oder eine Lösung organischer Amine verwendet wird.

5. Verfahren nach einem der Ansprüche 1 bis 4,
**dadurch gekennzeichnet, daß** nach dem Waschen und/oder dem Tränkprozeß der Katalysator unter Durchleiten von Luft bei einer Temperatur unterhalb von 70° C getrocknet wird.

6. Verfahren nach einem der Ansprüche 1 bis 5,
**dadurch gekennzeichnet, daß** unmittelbar nach der Behandlung des Katalysators mit einem gasförmigen Reduktionsmittel und/oder nach dem Waschen des Katalysators mit polyfunktionellen Komplexbildnern und/oder nach dem Tränkprozeß mit einem Katalysator-Aktivkomponenten aufweisenden polyfunktionellen Komplexbildner und/oder nach dem Trocknen des Katalysators der Katalysator mindestens einer thermischen Behandlung unterzogen wird.

7. Verfahren nach Anspruch 6,
**dadurch gekennzeichnet, daß** die thermische Behandlung innerhalb eines Temperaturbereichs von 100 bis 500° C vorgenommen werden.

## Claims

1. Process for regenerating a catalyst, in particular a plate-type or honeycomb catalyst, which has been at least partially deactivated by catalyst poisons, the catalyst being treated with a gaseous reducing agent in order to remove the catalyst poisons, **characterized in that**, following the treatment with the gaseous reducing agent, the catalyst is washed with a polyfunctional complex-forming agent, the polyfunctional complex-forming agent used being a hydroxycarboxylic acid or hydroxydicarboxylic acid solution or a solution of organic amines.

2. Process according to Claim 1, **characterized in that**, after the washing step, the catalyst is subjected to an impregnation process with at least one catalyst active component which is suspended or dissolved in a polyfunctional complex-forming agent.

3. Process according to Claim 2, **characterized in that** the catalyst active component comprises W, V, Mo, Fe, Cu, Fe, Co, Ni, Cr or a combination thereof.

4. Process for regenerating a catalyst, in particular a plate-type or honeycomb catalyst, which has been at least partially deactivated by catalyst poisons, the catalyst being treated with a gaseous reducing agent in order to remove the catalyst poisons, **characterized in that**, following the treatment with the gaseous reducing agent, the catalyst is subjected to an impregnation process with at least one catalyst active component which is suspended or dissolved in a polyfunctional complex-forming agent, the polyfunctional complex-forming agent used being a hydroxycarboxylic acid or hydroxydicarboxylic acid solution or a solution of organic amines.

5. Process according to one of Claims 1 to 4, **characterized in that**, after the washing step and/or the impregnation process, the catalyst is dried at a temperature of below 70°C with air being passed through it.

6. Process according to one of Claims 1 to 5, **characterized in that**, immediately after the catalyst has been treated with a gaseous reducing agent and/or after the catalyst has been washed with polyfunctional complex-forming agents and/or after the impregnation process with a polyfunctional complex-forming agent which contains catalyst active components and/or after the drying of the catalyst, the catalyst is subjected to at least one thermal treatment.

7. Process according to Claim 6, **characterized in that** the thermal treatment is carried out within a temperature range of from 100 to 500°C.

## Revendications

1. Procédé de régénération d'un pot catalytique, notamment d'un pot catalytique à plaques ou à nid d'abeille, qui est désactivé au moins en partie par des poisons de catalyseur, en traitant le pot catalytique pour éliminer les poisons du catalyseur par un agent réducteur gazeux,
**caractérisé en ce qu'**il consiste à laver le pot catalytique par un agent complexant polyfonctionnel après le traitement par l'agent réducteur gazeux en utilisant comme agent complexant polyfonctionnel une solution d'acide hydroxy-carboxylique ou une solution d'acide hydroxy-dicarboxylique ou une solution d'amine organique.

2. Procédé suivant la revendication 1,
**caractérisé en ce qu'**il consiste, après le lavage, à soumettre le pot catalytique à une opération d'imprégnation par au moins un constituant actif de catalyseur qui est mis en suspension ou qui est dissous dans un agent complexant polyfonctionnel.

3. Procédé suivant la revendication 2,
**caractérisé en ce que** le constituant actif de catalyseur comprend W, V, Mo, Fe, Cu, Fe, Co, Ni, Cr ou une combinaison de ceux-ci.

4. Procédé de régénération d'un pot catalytique, notamment d'un pot catalytique à plaques ou à nid d'abeille, qui est désactivé au moins en partie par des poisons de catalyseur, en traitant le pot catalytique pour éliminer les poisons du catalyseur par un agent réducteur gazeux,
**caractérisé en ce qu'**il consiste à soumettre le pot catalytique après traitement par l'agent réducteur gazeux à une opération d'imprégnation par au moins un constituant actif de catalyseur qui est mis en suspension ou qui est dissous dans un agent complexant polyfonctionnel en utilisant comme agent complexant polyfonctionnel une solution d'acide hydroxy-carboxylique ou une solution d'acide hydroxy-dicarboxylique ou une solution d'amine organique.

5. Procédé suivant l'une des revendications 1 à 4,
**caractérisé en ce qu'**il consiste, après le lavage et/ou l'opération d'imprégnation, à sécher le pot catalytique par envoi d'air à une température inférieure à 70°C.

6. Procédé suivant l'une des revendications 1 à 5,
**caractérisé en ce qu'**il consiste, juste après le traitement du pot catalytique par un agent réducteur gazeux et/ou après le lavage du pot catalytique par des agents complexants polyfonctionnels et/ou après l'opération d'imprégnation par un agent complexant polyfonctionnel ayant un constituant actif de catalyseur et/ou après le séchage du pot catalytique, à soumettre le pot catalytique à au moins un traitement thermique.

7. Procédé suivant la revendication 6,
**caractérisé en ce qu'**il consiste à effectuer le traitement thermique dans un domaine de température allant de 100 à 500°C.
